# EUROPÄISCHE PATENTSCHRIFT

(11) **EP 2 772 625 B1**
(45) Veröffentlichungstag und Bekanntmachung des Hinweises auf die Patenterteilung: **11.07.2018**
(21) Anmeldenummer: 14151917.3
(22) Anmeldetag: 21.01.2014
(51) Int. Cl.: F02M 26/54, F02M 26/74, F02D 11/10, F02D 9/04, H02K 5/24

(54) **Antriebsanordnung für ein Aggregat eines Verbrennungsmotors**
Drive assembly for a unit of an internal combustion engine
Système d'entraînement de groupe de moteur à combustion

(30) Priorität: 27.02.2013 DE 102013101939
(43) Veröffentlichungstag der Anmeldung: 03.09.2014
(73) Patentinhaber: Pierburg GmbH, 41460 Neuss (DE)
(72) Erfinder: Simons, Norbert, 40233 Düsseldorf (DE)
(74) Vertreter: Patentanwälte ter Smitten Eberlein-Van Hoof Rütten Partnerschaftsgesellschaft mbB

(56) Entgegenhaltungen:
- EP-A1- 1 384 873
- WO-A1-96/37031
- FR-A- 1 419 349
- GB-A- 2 169 754
- JP-A- H10 322 961

## Beschreibung

Die Erfindung betrifft eine Antriebsanordnung für ein Aggregat eines Verbrennungsmotors mit einem Antriebselement und einem Gehäuse mit einem feststehenden Aufnahmeteil und einem daran befestigten Deckel.

Derartige Antriebsanordnungen dienen zur Betätigung unterschiedlicher Aggregate in Verbrennungsmotoren. Hier ist zwischen Aggregaten zu unterscheiden, die kontinuierlich oder zumindest über einen längeren Zeitraum betrieben werden, wie beispielsweise Pumpen zur Förderung von Luft, Abgas, Kühlmittel oder anderen hydraulischen Fluiden und Aggregaten, deren Antrieb nur über einen definierten Stellbereich wirkt, wie beispielsweise Ventilen und Klappen, insbesondere Abgasrückführventilen, Abgasklappen oder Drosselklappen.

Alle diese Antriebe sind im Verbrennungsmotor großen Schwing- und Stoßbelastungen ausgesetzt, so dass das Antriebselement möglichst gut gedämpft gelagert werden muss, um Beschädigungen am Antriebselement zu vermeiden. Entsprechend muss eine Verspannung des Antriebselementes sichergestellt werden, da sonst eine Relativbewegung zwischen dem anzutreibenden Aggregat und dem Antriebselement zu befürchten ist, was zu Beschädigungen führen kann. Problematisch ist dabei jedoch die sich gegebenenfalls summierenden Toleranzen bezüglich der Längen der zusammenzusetzenden Einzelteile, also der Einschubtiefe des Antriebselementes in das feststehende Gehäuse, der Länge des Deckels und der Länge des Antriebselementes, vor allem bei unterschiedlichen Wärmeausdehnungskoeffizienten der Einzelteile auszugleichen.

Es ist daher bekannt geworden, Zwischenelemente zur Befestigung eines Stellmotors zu verwenden, die einerseits eine dämpfende Wirkung aufweisen als auch zumindest in geringem Maße Toleranzen ausgleichen können.

So ist aus der US 6,860,466 B2 bekannt, das freie Ende des Gleichstrommotors mittels eines metallischen Rings radial im Gehäuse des Drosselventils zu lagern. Daneben schlägt die EP 1 544 438 A2 einen metallischen Anti-Vibrationsring zur axialen Verspannung von Elektromotor und Gehäuse vor. Hierbei handelt es sich jedoch um feststehendes Gehäuse, in die der Elektromotor mit seinem B-Lager eingesetzt wird.

Ein Elektromotor, der in ein feststehendes Gehäuse mit einer Aufnahme und gegen ein darin ausgebildetes A-Lagerschild geschoben wird, ist aus der DE 198 05 908 A1 bekannt. Zum Verschluss wird ein im Wesentlichen flacher Deckel auf das Gehäuse aufgesetzt, der eine Aufnahme für das B-Lager enthält. Um eine axiale Vorspannung des Elektromotors zu erzielen wird der Deckel leicht in eine gewölbte Stellung federnd verformt. So können unterschiedliche temperaturabhängige Ausdehnungskoeffizienten ausgeglichen werden. Ein Ausgleich fertigungsbedingter Toleranzen ist jedoch nicht möglich, da der zur Verfügung stehende Verformungsweg gering ist.

Des Weiteren ist aus der GB 2 169 754 A ein Elektromotor bekannt, der abtriebsseitig einen zweiteiligen Deckel aufweist, bei dem radial zwischen den beiden Deckelteilen ein elastisches Element angeordnet ist, so dass die beiden Deckelteile geringfügig axial zueinander verschieblich sind.

Eine ähnliche Ausführung offenbart auch die WO 96/37031 A1, bei der an der zum Abtrieb entgegengesetzten axialen Seite ein Deckel angeordnet ist, der unter axialer Zwischenlage eines elastischen Elementes an einem sich radial nach innen erstreckenden Bereich des Motorgehäuses befestigt ist.

Die EP 1 384 873 A1 und die JP 10322961 offenbaren Elektromotoren, deren abtriebsseitige Lager durch elastische Elemente in Richtung des Motors belastet werden.

Mit diesen Ausführungen ist es jedoch bislang nicht gelungen, alle auftretenden Toleranzen und Längenänderungen aufgrund von Fertigungsungenauigkeiten und unterschiedlichen Wärmeausdehnungskoeffizienten auszugleichen oder es werden zusätzliche Bauteile zum Ausgleich verwendet, die separat hergestellt und montiert werden müssen und ebenfalls bezüglich ihrer Vorspannwirkung eingeschränkt sind.

Es ist daher die Aufgabe der Erfindung, eine Antriebanordnung für ein Aggregat einer Verbrennungskraftmaschine bereit zu stellen, mit der einerseits eine axiale Verspannung von einem Antrieb in einem Gehäuse ermöglicht wird, die möglichst schwingungsunempfindlich ist und andererseits ohne zusätzliche Bauteile verwenden zu müssen, über einen möglichst großen axialen Toleranzbereich diese Vorspannung sicherstellt. Dabei soll die Antriebsanordnung kostengünstig herstellbar sein. Eine Eignung für thermisch belastete Aggregate soll vorhanden sein.

Diese Aufgaben werden durch eine Antriebsanordnung für ein Aggregat eines Verbrennungsmotors mit den Merkmalen des Anspruchs 1 gelöst.

Vorteilhafte Ausgestaltungen sind in den Unteransprüchen angegeben, deren Merkmale entsprechend der angegebenen Rückbezüge in vorteilhafter Weise miteinander kombiniert werden können.

Dadurch, dass der Deckel einen sich axial erstreckenden Bereich aufweist, der elastisch in axialer Richtung längenveränderlich ist, wobei der längenveränderliche axiale Bereich als Wellrohr ausgeführt ist, können Längenungenauigkeiten oder Längenänderungen aufgrund thermischer Belastungen, ohne zusätzliche Bauteile verwenden zu müssen, ausgeglichen werden, ohne dass die Vorspannung des Antriebselementes im Gehäuse zu gering würde. Das Wellrohr eignet sich für relativ große Dehnungen ohne die Spannkraft zu verlieren. Des Weiteren kann dies direkt im Blech des Deckels hergestellt werden, wodurch der zu vollziehende Toleranzausgleich im Gegensatz zu der Verwendung von Kunststoffen auch nach lang währenden thermischen Belastungen noch sichergestellt wird.

Vorzugsweise ist das Antriebselement ein Elektromotor, der axial gegen ein am Gehäuse ausgebildetes A-Lagerschild durch die Federkraft des elastisch längenveränderlichen Deckels belastet ist. Dies vereinfacht die Montage, da der Elektromotor nach dem vollständigen Zusammenbau der anzuschließenden Organe, wie Getriebe oder Ventile eingebaut werden kann. Auch große Toleranzen und thermische Dehnungen werden ausgeglichen.

In einer vorteilhaften Ausführungsform liegt der Deckel axial gegen einen umlaufenden Anschlag am feststehenden Aufnahmeteil an. Auf diese Weise wird die axiale Lage des Deckels zum Gehäuse definiert und Fehler beim Zusammenbau vermieden.

Weiterhin ist zwischen dem Deckel und dem Aufnahmeteil des Gehäuses eine Dichtung angeordnet, wodurch ein Eindringen von Flüssigkeiten in den Innenraum des Gehäuses verhindert wird.

In einer hierzu weiterführenden Ausführung weist das Aufnahmeteil des Gehäuses eine umlaufende Ausnehmung auf, welche den Anschlag radial umgibt und in der die Dichtung angeordnet ist. Durch diese Anordnung der Dichtung kann die Montage durch einfaches Aufstecken der Dichtung und des Deckels erfolgen, wobei ein Quetschen der Dichtung zuverlässig vermieden wird.

Vorzugsweise weist der Deckel im Wesentlichen eine Topfform mit drei axial hintereinander liegenden Abschnitten mit stufenförmig, sich reduzierenden Durchmessern auf, wobei der elastisch längenveränderliche Bereich im mittleren Abschnitt ausgebildet ist. Entsprechend ist der längenveränderliche Bereich im Bereich zwischen dem vorderen und dem hinteren Anschlag des Deckels angeordnet, wodurch der Toleranzausgleich möglich wird.

In einer herzu weiterführenden vorteilhaften Ausgestaltung der Erfindung umschließt der breiteste Abschnitt eine Erweiterung am Aufnahmeteil, der mittlere Abschnitt umgibt den Elektromotor radial und der nach hinten geschlossene schmalste Abschnitt umschließt radial einen B-Lagerabschnitt des Elektromotors, welcher ein axiales Ende des Elektromotors bildet. Auf diese Weise wird eine gute thermische Anbindung vom Elektromotor zum Deckel geschaffen, so dass die Wärmeabfuhr verbessert wird. Eine zusätzliche Aufnahme des B-Lagers ist nicht erforderlich.

Des Weiteren ist vorzugsweise das axiale Ende des die Erweiterung umschließenden breitesten Abschnitts des Deckels hinter der Erweiterung zur Befestigung des Deckels nach radial innen verformt. Diese Verformung kann als Bördelung oder Verkrimpung ausgeführt werden und bildet eine kostengünstige und langlebige Befestigung des Deckels.

In einer weiteren Ausführung ist axial zwischen dem Deckel und dem Elektromotor ein Zwischenelement angeordnet. Dieses kann als zusätzliches Verlängerungselement des B-Lagerabschnitts im dritten Abschnitt, also der topfförmigen Aufnahme des Deckels, verwendet werden, wenn das B-Lager axial sehr kurz ist und der Deckel mit größeren Radien hergestellt werden muss.

Vorteilhaft ist es, wenn das Zwischenelement elastisch verformbar ist. In diesem Fall kann es zusätzlich als Dämpfungsorgan in axialer und radialer Richtung dienen.

In einer hierzu weiterführenden Ausbildung der Erfindung weist das Zwischenelement einen sich axial erstreckenden ringförmigen elastischen Kragen auf, gegen den radial innen der Elektromotor anliegt und gegen den radial außen der Deckel anliegt. So kann auf einfache Weise eine radiale Dämpfung verwirklicht werden.

Zusätzlich ist der Deckel mit seiner topfförmigen Aufnahme vorteilhafterweise als Tiefziehteil ausgebildet. Diese sind in großen Mengen kostengünstig herstellbar und weisen ein geringes Gewicht auf.

Die erfindungsgemäße Antriebsanordnung zeichnet sich somit durch eine lange Lebensdauer aufgrund allseitiger Schwingungsentkopplung, durch eine besonders kostengünstige Herstellbarkeit und Montage sowie durch einen zuverlässigen Längenausgleich aus, der dafür sorgt, dass thermische Dehnungen und große Fertigungstoleranzen ausgeglichen werden können. So kann mit einem Bauteil eine Dämpfung bei gleichzeitigem Erhalt der Vorspannung auch bei auftretenden Schwingungsbelastungen sichergestellt werden. Zusätzlich entsteht eine verbesserte Wärmeabfuhr.

Weitere Vorteile und Merkmale werden anhand eines Ausführungsbeispiels in der nachfolgenden Figurenbeschreibung aufgezeigt.

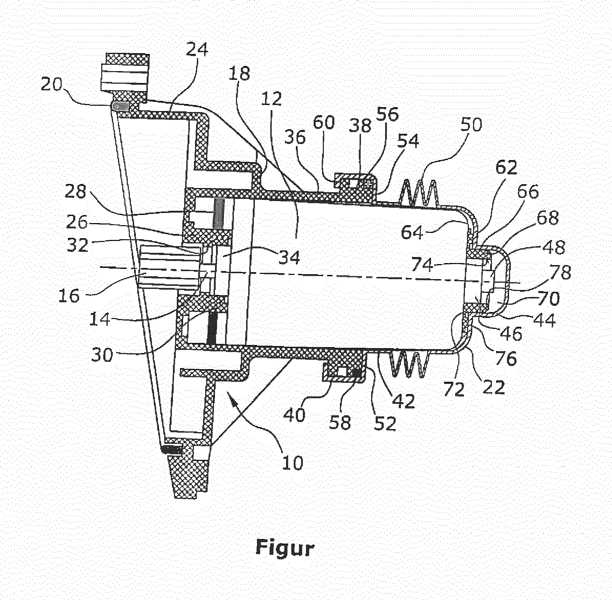

Die Figur zeigt eine Seitenansicht einer ersten erfindungsgemäßen Antriebsanordnung in teilweise geschnittener Darstellung.

In der Figur ist eine Antriebsanordnung dargestellt, die ein Gehäuse 10 aufweist, in der ein Antriebselement in Form eines Elektromotors 12 angeordnet ist. Im vorliegenden Ausführungsbeispiel ist auf einer Antriebswelle 14 des Elektromotors 12 ein Antriebsritzel 16 drehfest angeordnet, welches beispielsweise zur Betätigung eines Abgasrückführventils über ein Getriebe dient.

Das dargestellte Gehäuse 10 ist mehrteilig ausgebildet und umfasst ein geschnitten dargestelltes feststehendes Aufnahmeteil 18, das unter Zwischenlage einer Dichtung 20 an einem nicht dargestellten Getriebegehäuseteil befestigt wird, sowie einen am Aufnahmeteil 18 befestigten Deckel 22. Das Aufnahmeteil 18 weist einen Abdeckabschnitt 24 auf, in dem die Dichtung 20 angeordnet ist und über den das Getriebegehäuseteil verschlossen wird. Im zur Dichtung 20 radial inneren Bereich weist dieser Abdeckabschnitt 24 ein A-Lagerschild 26 auf, in dem eine Platine 28 zur Steuerung und Kontaktierung des Elektromotors 12 gelagert ist und an dem ein ringförmiger Anschlag 30 ausgebildet ist, gegen den der Elektromotor 12 axial anliegt. Im radial inneren Bereich dieses Anschlags 30 ist eine Öffnung 32 ausgebildet, durch die das Antriebsritzel 16 ragt und die das erste Radiallager 34 des Elektromotors 12 radial aufnimmt.

Zur zum Getriebegehäuseteil entgegengesetzten Seite erstreckt sich ein hohlzylindrischer Abschnitt 36, der den Elektromotor 12 über eine definierte axiale Länge radial umgibt und an dessen Ende eine ringförmige Erweiterung 38 ausgebildet ist. Nach dem Einschieben des Elektromotors 12 in diesen hohlzylindrischen Abschnitt 36 des Aufnahmeteils 18 wird über den Elektromotor 12 der Deckel 22 geschoben. Dieser ist ein durch Tiefziehen hergestelltes Blechteil, welches ebenfalls den Elektromotor 12 über den nicht vom hohlzylindrischen Abschnitt 36 bedeckten Abschnitt radial umgibt sowie ein freies axiales Ende 48 des Elektromotors 12 verschließt.

Der Deckel 22 weist im Wesentlichen eine Topfform mit drei Abschnitten 40, 42, 44 auf, deren Durchmesser stufenförmig reduziert sind. Der erste Abschnitt 40 mit dem breitesten Durchmesser umschließt die Erweiterung 38 am Aufnahmeteil 18, während der zweite Abschnitt 42 mit dem mittleren Durchmesser den Elektromotor 12 mit geringem Abstand radial umgibt. Der dritte nach hinten geschlossene, mit dem kleinsten Durchmesser ausgeführte Abschnitt 44 umgibt einen B-Lagerabschnitt 46 des Elektromotors 12, welcher das axiale Ende 48 des Elektromotors 12 bildet.

Erfindungsgemäß ist im zweiten Abschnitt 42 ein elastischer in axialer Richtung längenveränderlicher Bereich in Form eines Wellrohres 50 ausgebildet.

Beim Zusammenbau wird der erste Abschnitt 40 über die Erweiterung 38 geschoben bis eine erste Stufe 52 zwischen dem ersten und dem zweiten Abschnitt 40, 42 des Deckels 22 gegen einen Anschlag 54, der durch das axiale Ende der Erweiterung 38 gebildet wird, anliegt. Die ringförmige Erweiterung 38 weist eine zur ersten Stufe 52 gewandte ringförmige Ausnehmung 56 auf, in der ein als Dichtung 58 dienender O-Ring angeordnet ist, so dass eine dichte Verbindung entsteht. Der dritte Abschnitt 44 weist zu diesem Zeitpunkt eine größere axiale Erstreckung auf als die Erweiterung 38 des feststehenden Aufnahmeteils 18, so dass dessen Ende 60 anschließend hinter der Erweiterung 38 nach radial innen umgeschlagen, insbesondere gebördelt wird, wodurch der Deckel 22 am feststehenden Aufnahmeteil 18 befestigt wird.

Beim Aufschieben des Deckels 22 gegen den Anschlag 54, wird das Wellrohr 50 erfindungsgemäß elastisch verformt beziehungsweise axial gedehnt. Eine zweite Stufe 62 zwischen dem zweiten Abschnitt 42 und dem dritten Abschnitt 44 gelangt beim Aufschieben in Anlage zu einer Rückwand 64 des Elektromotors 12 oder, wie im vorliegenden Fall, in Anlage zu einem elastischen Zwischenelement 66, welches zwischen der zweiten Stufe 62 des Deckels 22 und dem Elektromotor 12 angeordnet ist, bevor der Anschlag 54 erreicht wird. Das weitere Aufschieben bis zum Anschlag 54 führt zu einer elastischen Verformung des Deckels 22 im Bereich des Wellrohres 50, wodurch eine Federkraft entsteht, durch die der Elektromotor 12 gegen den Anschlag 30 des A-Lagerschildes 26 gedrückt wird. Selbstverständlich sind hierzu die korrespondierenden Längen des Elektromotors 12, des Deckels 22, des hohlzylindrischen Abschnitts 36 des Aufnahmeteils 18 sowie des Zwischenelementes 66 entsprechend zu wählen.

Wird diese Antriebsanordnung beispielsweise zum Antrieb eines Abgasrückführventils verwendet, werden aufgrund der thermischen Belastung Wärmedehnungen an den einzelnen Teilen auftreten. Diese sind wegen der unterschiedlichen verwendeten Materialien, beispielsweise Kunststoff und verschiedene Metalle und den damit verbundenen verschiedenen Wärmeausdehnungskoeffizienten, unterschiedlich groß. Bei ausreichender Spannung des Wellrohres 50 beim Zusammenbau im kalten Zustand können jedoch auch diese Wärmedehnungen ausgeglichen werden und eine weiterhin wirkende Verspannung des Elektromotors 12 durch den Deckel 22 sichergestellt werden. Selbstverständlich gilt dieser Längenausgleich durch das Wellrohr 50 auch für vorhandene Toleranzen der Einzelteile bei der Herstellung, da das Wellrohr 50 in einem deutlich über verschiedene Wärmedehnungen und Fertigungstoleranzen hinausgehenden Bereich elastisch in axialer Richtung verformbar ist. Nichtzuletzt sei auch darauf hingewiesen, dass in gewissem Maß auch radial durch das Wellrohr 50 ein gewisser Ausgleich hergestellt werden kann, indem die gegenüberliegenden Seiten des Wellrohres 50 unterschiedlich gedehnt werden.

Des Weiteren wird durch diese Elastizität des Wellrohrs 50 eine Dämpfung bei auftretenden Schwingungen erzielt, die den Elektromotor 12 und ein gegebenenfalls nachfolgendes Getriebe im Bereich des Eingriffs vor Beschädigungen schützt. Bei einer Version ohne das angesprochene Zwischenelement 66 besteht außerdem eine sehr gute metallische Anbindung zwischen dem Elektromotor 12 und dem Deckel 22, was zu einer verbesserten Wärmeabfuhr führt.

Im vorliegenden Ausführungsbeispiel ist zusätzlich zu diesem Wellrohr 50 das zuvor über den B-Lagerabschnitt 46 geschobene Zwischenelement 66 elastisch verformt zwischen der Rückwand 64 des Elektromotors 12 und dem Deckel 22 eingeklemmt. Gleichzeitig wird ein ringförmiger Kragen 68 des Zwischenelementes 66, der den B-Lagerabschnitt 46 und damit das axiale Ende 48 des Elektromotors 12 umgibt In einer topfförmigen Aufnahme 70 des Deckels 22, welche durch den dritten Abschnitt des Deckels 22 gebildet wird, aufgenommen und radial verspannt.

Dieses Zwischenelement 66 ist aus einem Elastomer hergestellt und besteht aus einem scheibenförmigen Teil 72, welches eine zentrale Öffnung 74 aufweist. Vom scheibenförmigen Teil 72 erstrecken sich im radial äußeren Bereich des scheibenförmigen Teils 72 in axialer Richtung über den Umfang verteilt acht Vorsprünge in Form von Noppen 76. Diese Noppen 76 werden beim Zusammenbau zwischen dem Elektromotor 12 und dem Deckel 22 axial zusammengedrückt, wodurch eine zusätzliche Verspannung entsteht. Vom radial inneren Bereich des scheibenförmigen Teils 72 aus erstreckt sich die Öffnung 74 umgebend der Kragen 68 in axialer Richtung. Dieser Kragen 68 umgibt den B-Lagerabschnitt 46 des Elektromotors 12 und verlängert diesen Abschnitt, so dass auch die axial zur Verfügung stehende Aufnahmelänge zur Lagerung des Elektromotors 12 verlängert wird. Das Ende ist am Außenumfang des Kragens 68 mit einer Fase 78 versehen, wodurch beim Aufschieben des Deckels 22 über die Fase 78 auf das Zwischenelement 66 eine allmähliche Zentrierung des B-Lagerabschnitts 46 in der topfförmigen Aufnahme 70 erfolgt. So wird die Montage deutlich erleichtert, da ein radialer Druck erst nach Überschreiten der Fase 78 beim Aufschieben auf den Kragen 68 erzeugt wird.

Durch die Elastizität des Zwischenelementes 64 wird somit eine in axialer und radialer Richtung zusätzlich schwingungsgedämpfte Aufnahme des Elektromotors 12 im Deckel 22 erzeugt.

Die erfindungsgemäße Antriebsanordnung gleicht somit ohne zusätzliche Bauteile vorhandene Fertigungstoleranzen und Wärmedehnungen aus, wobei die axiale Verspannung des Elektromotors sichergestellt wird. Entsprechend wird eine hohe Lebensdauer auch bei großer Schwingungsbelastung sichergestellt.

Es sollte deutlich sein, dass der Schutzbereich des Hauptanspruchs nicht auf das beschriebene Ausführungsbeispiel begrenzt ist. Insbesondere kann der elastisch längenveränderliche Deckel auch ohne das Zwischenelement verwendet werden und als Schwingungsdämpfungsglied ausreichen. Andere Ausführungen des elastisch verlängerbaren Bereichs als das Wellrohr sind ebenfalls denkbar. Auch ist diese Anordnung für viele verschiedene Verwendungen geeignet. Selbstverständlich sind auch weitere konstruktive Änderungen des Gehäuses, des Deckels oder des Antriebselementes denkbar, ohne den Schutzbereich der Hauptansprüche zu verlassen.

## Patentansprüche

1. Antriebsanordnung für ein Aggregat eines Verbrennungsmotors mit einem Antriebselement (12) und
einem Gehäuse (10) mit einem feststehenden Aufnahmeteil (18) und einem daran befestigten Deckel (22), wobei der Deckel (22) einen sich axial erstreckenden Bereich aufweist, der elastisch in axialer Richtung längenveränderlich ist, **dadurch gekennzeichnet, dass** der längenveränderliche Bereich als Wellrohr (50) ausgeführt ist.

2. Antriebsanordnung für ein Aggregat eines Verbrennungsmotors nach Anspruch 1,
**dadurch gekennzeichnet, dass**
das Antriebselement ein Elektromotor (12) ist, der axial gegen ein am Gehäuse (10) ausgebildetes A-Lagerschild (26) durch die Federkraft des elastisch längenveränderlichen Deckels (22) belastet ist.

3. Antriebsanordnung für ein Aggregat eines Verbrennungsmotors nach einem der Ansprüche 1 oder 2,
**dadurch gekennzeichnet, dass**
der Deckel (22) axial gegen einen umlaufenden Anschlag (30) am feststehenden Aufnahmeteil (18) anliegt.

4. Antriebsanordnung für ein Aggregat eines Verbrennungsmotors nach einem der vorhergehenden Ansprüche,
**dadurch gekennzeichnet, dass**
zwischen dem Deckel (22) und dem Aufnahmeteil (18) des Gehäuses (10) eine Dichtung (58) angeordnet ist.

5. Antriebsanordnung für ein Aggregat eines Verbrennungsmotors nach Anspruch 4,
**dadurch gekennzeichnet, dass**
das Aufnahmeteil (18) des Gehäuses (10) eine umlaufende Ausnehmung (56) aufweist, welche den Anschlag (54) radial umgibt und in der die Dichtung (58) angeordnet ist.

6. Antriebsanordnung für ein Aggregat eines Verbrennungsmotors nach einem der vorhergehenden Ansprüche,
**dadurch gekennzeichnet, dass**
der Deckel (22) im Wesentlichen eine Topfform mit drei axial hintereinander liegenden Abschnitten (40, 42, 44) mit stufenförmig sich reduzierenden Durchmessern aufweist, wobei der elastisch längenveränderliche Bereich im mittleren Abschnitt (42) ausgebildet ist.

7. Antriebsanordnung für ein Aggregat eines Verbrennungsmotors nach Anspruch 6,
**dadurch gekennzeichnet, dass**
der breiteste erste Abschnitt (40) eine Erweiterung (38) am Aufnahmeteil (18) umschließt, der mittlere Abschnitt (42) den Elektromotor (12) radial umgibt und der nach hinten geschlossene dritte Abschnitt (44) einen B-Lagerabschnitt (46) des Elektromotors (12), welcher ein axiales Ende (48) des Elektromotors (12) bildet, radial umschließt.

8. Antriebsanordnung für ein Aggregat eines Verbrennungsmotors nach Anspruch 7,
**dadurch gekennzeichnet, dass**
das axiale Ende des die Erweiterung (38) umschließenden breitesten Abschnitts (40) des Deckels (22) hinter der Erweiterung (38) zur Befestigung des Deckels (22) nach radial innen verformt ist.

9. Antriebsanordnung für ein Aggregat eines Verbrennungsmotors nach einem der vorhergehenden Ansprüche,
**dadurch gekennzeichnet, dass**
axial zwischen dem Deckel (22) und dem Elektromotor (12) ein Zwischenelement (66) angeordnet ist.

10. Antriebsanordnung für ein Aggregat eines Verbrennungsmotors nach Anspruch 9,
**dadurch gekennzeichnet, dass**
das Zwischenelement (66) elastisch verformbar ist.

11. Antriebsanordnung für ein Aggregat eines Verbrennungsmotors nach einem der Ansprüche 9 oder 10,
**dadurch gekennzeichnet, dass**
das Zwischenelement (66) einen sich axial erstreckenden ringförmigen elastischen Kragen (68) aufweist, gegen den radial innen der Elektromotor (12) anliegt und gegen den radial außen der Deckel (22) anliegt.

12. Antriebsanordnung für ein Aggregat eines Verbrennungsmotors nach einem der vorhergehenden Ansprüche,
**dadurch gekennzeichnet, dass**
der Deckel (22) mit seiner topfförmigen Aufnahme (70) als Tiefziehteil ausgebildet ist.

## Claims

1. Drive assembly for a unit of an internal combustion engine, comprising
a drive element (12) and
a housing (10) with a stationary receptacle part (18) and a cover (22) fastened thereto,
wherein the cover (22) has an axially extending portion which is elastically variable in length in the axial direction,
**characterized in that** the length-variable portion is designed as a corrugated tube (50).

2. Drive assembly for a unit of an internal combustion engine of claim 1, **characterized in that** the drive element is an electric motor (12) axially biased against an A-bearing plate (26) formed at the housing (10) by the spring force of the elastically length-variable cover (22).

3. Drive assembly for a unit of an internal combustion engine of one of claims 1 or 2, **characterized in that** the cover (22) rests axially against a circumferentially extending stop (30) at the stationary receptacle part (18).

4. Drive assembly for a unit of an internal combustion engine of one of the preceding claims, **characterized in that** a seal (58) is arranged between the cover (22) and the receptacle part (18) of the housing (10).

5. Drive assembly for a unit of an internal combustion engine of claim 4, **characterized in that** the receptacle part (18) of the housing (10) has a circumferentially extending recess (56) that radially surrounds the stop (54) and in which the seal (58) is arranged.

6. Drive assembly for a unit of an internal combustion engine of one of the preceding claims, **characterized in that** the cover (22) is substantially pot-shaped with three axially successive sections (40, 42, 44) having stepwise decreasing diameters, wherein the elastically length-variable portion is formed in the central section (42).

7. Drive assembly for a unit of an internal combustion engine of claim 6, **characterized in that** the widest, first section (40) surrounds an enlargement (38) on the receptacle part (18), the central section (42) radially surrounds the electric motor (12), and the third section (44), which is closed to the rear side, radially surrounds a B-bearing section (46) of the electric motor (12) forming an axial end (48) of the electric motor (12).

8. Drive assembly for a unit of an internal combustion engine of claim 7, **characterized in that** the axial end of the widest section (40) of the cover (22) surrounding the enlargement (38) is deformed radially inward behind the enlargement (38) so as to enable a fastening the cover (22).

9. Drive assembly for a unit of an internal combustion engine of one of the preceding claims, **characterized in that** an intermediate element (66) is arranged between the cover (22) and the electric motor (12).

10. Drive assembly for a unit of an internal combustion engine of claim 9, **characterized in that** the intermediate element (66) is elastically deformable.

11. Drive assembly for a unit of an internal combustion engine of one of claims 9 or 10, **characterized in that** the intermediate element (66) has an axially extending annular elastic collar (68) against which the electric motor (12) abuts on the radially inner side and against which the cover (22) abuts on the radially outer side.

12. Drive assembly for a unit of an internal combustion engine of one of the preceding claims, **characterized in that** the cover (22) with its pot-shaped receptacle (70) is formed as a deep-drawn part.

## Revendications

1. Système d'entrainement de groupe de moteur à combustion interne, avec
un élément entraineur (12) et
un carter (10) avec une partie réceptrice (18) fixe et un couvercle (22) monté sur celle-ci,
le couvercle (22) ayant une région s'étendant axialement, la région étant élastiquement variable en longueur dans la direction axiale,
**caractérisé en ce que** la région variable en longueur est réalisée en forme d'un tube ondulé (50).

2. Système d'entrainement de groupe de moteur à combustion interne selon la revendication 1, **caractérisé en ce que** ledit élément entraineur (12) est un moteur électrique (12) sollicité dans la direction axiale, par la force élastique du couvercle (22) élastiquement variable en longueur, contre une flasque de palier A (26) formée sur le carter (10).

3. Système d'entrainement de groupe de moteur à combustion interne selon l'une quelconque des revendications 1 ou 2, **caractérisé en ce que** le couvercle (22) reste axialement contre une butée (30) circonférentielle sur la partie réceptrice (18) fixe.

4. Système d'entrainement de groupe de moteur à combustion interne selon l'une quelconque des revendications précédentes, **caractérisé en ce qu'**un joint (58) est disposé entre le couvercle (22) et la partie réceptrice (18).

5. Système d'entrainement de groupe de moteur à combustion interne selon la revendication 4, **caractérisé en ce que** la partie réceptrice (18) du carter (10) présente un évidement (56) circonférentielle radialement entourant la butée (54) at dans lequel le joint (58) est disposé.

6. Système d'entrainement de groupe de moteur à combustion interne selon l'une quelconque des revendications précédentes, **caractérisé en ce que** le couvercle (22) est essentiellement en forme de pot avec trois sections (40, 42, 44) axialement en série ayant des diamètres décroissants en gradins, ladite région élastiquement variable en longueur étant formée dans la section intermédiaire (42).

7. Système d'entrainement de groupe de moteur à combustion interne selon la revendication 6, **caractérisé en ce que** la première section (40) la plus large entoure un évasement (38) sur la partie réceptrice (18), la section (42) radialement entoure ledit moteur électrique (12), et la troisième section (44), fermée vers l'arrière, radialement entoure une section de palier B (46) du moteur électrique (12), qui forme une extrémité axiale (48) du moteur électrique (12).

8. Système d'entrainement de groupe de moteur à combustion interne selon la revendication 7, **caractérisé en ce que** l'extrémité axiale de la section (40) la plus large du couvercle (22), qui entoure l'évasement (38), est déformée radialement vers l'intérieur derrière l'évasement (38), pour la fixation du couvercle (22).

9. Système d'entrainement de groupe de moteur à combustion interne selon l'une quelconque des revendications précédentes, **caractérisé en ce qu'**un élément intermédiaire (66) est disposé axialement entre le couvercle (22) et le moteur électrique (12).

10. Système d'entrainement de groupe de moteur à combustion interne selon la revendication 6, **caractérisé en ce que** ledit élément intermédiaire (66) est élastiquement déformable.

11. Système d'entrainement de groupe de moteur à combustion interne selon l'une quelconque des revendications 9 ou 10, **caractérisé en ce que** ledit élément intermédiaire (66) comprend une collerette axiale annulaire élastique contre laquelle reste ledit moteur électrique (12) sur le côté radialement intérieur et contre laquelle reste le couvercle (22) sur le côté radialement extérieur.

12. Système d'entrainement de groupe de moteur à combustion interne selon l'une quelconque des revendications précédentes, **caractérisé en ce que** le couvercle (22) avec son réceptacle (70) en forme de pot est réalisé comme une pièce emboutée.
